# EUROPEAN PATENT SPECIFICATION

(11) **EP 3 043 443 B1**
(45) Date of publication and mention of the grant of the patent: **23.12.2020**
(21) Application number: 16150301.6
(22) Date of filing: 06.01.2016
(51) Int. Cl.: H02J 7/00, H02J 7/02, H02J 1/10

(54) **CHARGE LIMIT SELECTION FOR VARIABLE POWER SUPPLY CONFIGURATION**
LADUNGSGRENZENAUSWAHL FÜR VARIABLE STROMVERSORGUNGSKONFIGURATION
SÉLECTION DE LIMITE DE CHARGE POUR CONFIGURATION D'ALIMENTATION VARIABLE

(30) Priority: 08.01.2015 US 201562101235 P; 17.12.2015 US 201514972460
(43) Date of publication of application: 13.07.2016
(73) Proprietor: Hand Held Products, Inc., Fort Mill, SC 29707 (US)
(72) Inventor: HAGGERTY, Thomas, Morris Plains, NJ 07950 (US); COLAVITO, Stephen J., Morris Plains, NJ 07950 (US); ALLEN, Christopher, Morris Plains, NJ 07950 (US)
(74) Representative: Haseltine Lake Kempner LLP

(56) References cited:
- WO-A1-2008/075140
- WO-A1-2014/173037
- US-A1- 2008 174 277
- US-A1- 2011 167 187
- US-A1- 2012 098 478
- US-A1- 2014 145 504
- US-B1- 7 525 291
- US-B1- 7 560 898

## Description

### FIELD OF THE INVENTION

The invention is generally related to a variable power supply configuration, and, more specifically, to a variable power supply configuration having multiple power supplies.

### BACKGROUND

Some devices with charge storage capabilities, such as batteries, capacitors, or supercapacitors, can be connected to multiple power supplies for charging or powering the device directly--either at different times or simultaneously. Commonly, each of these power supplies is capable of sourcing a different amount of power to the device.

Patent document number US2008/174277A1 describes a charging apparatus that enables safe and stable charging operation upon switching of power supplies for charging use. The charging apparatus has: a first power supply that has a current limiting function; a second power supply that has a current limiting function lower than the current limiting function of the first power supply; a first charging circuit that charges a battery using the first power supply; a second charging circuit that charges a battery using the second power supply; and a power supply selecting circuit that detects the voltage of the first power supply and the voltage of the second power supply and controls charging operation of the second charging circuit based on the detected results. The charging apparatus selects one of the first charging circuit and the second charging circuit based on the output voltage of first power supply that has a current limiting function, and controls the charging current upon charging operation from second power supply that has a lower current limiting function.

Patent document number US2014/145504A1 describes a semiconductor integrated circuit and operation method to reduce the possibility that a DC-DC converter stops in the case where supply power is small and load current is large. Output terminals use a DC output voltage of a DC-DC converter so that an external battery can be charged or power can be supplied to a power-reception-side system on the outside, and a current limiting circuit limits load current of a power supply switch transistor flowing from a converter output terminal to the output terminals. An input voltage detecting circuit detects level of a DC input voltage of an input terminal, generates a detection signal, and supplies the detection signal to the current limiting circuit. In the case where the DC input voltage of the input terminal is at the low level, the current limiting circuit controls the maximum current by current limitation of the power supply switch transistor to a small current.

WO2014/173037 discloses a mobile terminal, comprising: a battery; a universal serial bus interface; a central processing unit used for generating an opening or closing command, and used for outputting an adjustment signal; a universal serial bus charging management module used for opening or closing a charging channel according to the opening or closing command, and used for controlling the magnitude of the charging current according to the adjustment signal, and converging the charging currents and transmitting same to a charging management chip; and the charging management chip used for transmitting the charging currents to the battery for charging.

WO2008/075140 discloses a charging unit which comprises a first input connectable to a first power source, a second input connectable to a second power source, and an output for connection to a battery to be charged. The charging unit also comprises a power supply unit operable simultaneously to provide power from the first input and power from the second input to the output.

US2011/167187 discloses circuits, methods, and apparatus that allow a portable electronic device to be placed in a second electronic device in more than one orientation. One example allows a portable computing device to be placed in a docking station in both landscape and portrait orientations.

If the charge circuitry that limits the charging rate is built into the device itself, and not into the supplies, the charging rate is typically limited to that of the weakest supply. For example, if the device is a hard drive having a USB connector and a separate barrel connector for plugging in an AC adaptor, the USB connector may be able to supply 500mA of current, while the barrel adapter may be able to supply 1 A. Typically, the device will have a built-in charging rate that is limited to the lowest charging rate, which would be 500mA in this example. Thus, the device protects overcurrent to the USB host when the barrel connector is attached. This is conventional approach, while protecting the weakest supply, is suboptimal, since the device is unable to utilize the available higher charging rate. Thus, the device has a charging time that is longer than necessary. Additionally, for devices without a battery, being limited to the lowest charging rate can limit the device's functionality, when such functionality could be enhanced by the available higher charging rate.

### SUMMARY

The present invention in its various aspects is as set out in the appended claims.

In an aspect of the invention, a method comprises the steps of charging a device coupled to a charger; detecting a charger attached power supply configuration; and limiting a charge current of the charger based on the detected power supplies.

In an embodiment, detecting an attached power supply configuration includes detecting changes to the power supply configuration.

In another embodiment, detecting changes includes detecting insertion and removal of power supply connectors to the charger while charging the device.

In an embodiment, the charger supply configuration comprises at least one of a USB power supply coupled to the charger via a USB connector and an AC adapter power supply coupled to the charger via a barrel connector.

In an embodiment, a USB power supply is coupled to the charger and wherein upon detection of an AC adapter power supply being connected, the method further comprises disabling a USB charge path.

In an embodiment, upon detection of only a USB power supply being coupled to the charger, the charge current is limited to approximately 500 mA.

In an embodiment, limiting a charge current comprises limiting charge current in a USB charge path independently of limiting charge current in a separate AC adapter charge path.

In another embodiment, the current in the USB charge path is limited to approximately 500 mA and the current in the AC adapter charge path is limited to approximately 1A.

In an embodiment, detecting a charger attached power supply configuration comprises detecting the presence of a supply voltage on a given input pin.

In an embodiment, detecting a charger attached power supply configuration comprises receiving an identification signal from an attached power supply.

In another aspect of the invention, a device comprises a charger connector; a power supply configuration detector coupled to the charger connector to detect a power supply configuration; and a current limiter coupled to the power supply configuration detector to limit charge current based on the detected power supply configuration.

In an embodiment, the charger connector comprises a cradle having multiple pins to couple to a charge storage element.

In another embodiment, the power supply configuration detector detects changes to the power supply configuration.

In yet another embodiment, the power supply configuration detector detects insertion and removal of power supply connectors to the charger while charging the device.

In an embodiment, the charger supply configuration comprises at least one of a USB power supply to couple to the charger via a USB connector and an AC adapter power supply to couple to the charger via a barrel connector.

In yet another embodiment, the device further includes separate charge paths for each different power supply in the power supply configuration.

In yet another embodiment, the current limiter is configured to disable a USB charge path upon detection of an AC adapter power supply being connected.

In an embodiment, the current limiter is configured to limit charge current to approximately 500 mA when a USB power supply is connected to the charge connector.

In another embodiment, the current limiter limits a charge current in a USB charge path independently of limiting charge current in a separate AC adapter charge path.

In an embodiment, the current in the USB charge path is limited to approximately 500 mA and the current in the AC adapter charge path is limited to approximately 1A.

In an embodiment, the power supply configuration detector detects the presence of a supply voltage on a given input pin.

In an embodiment, the power supply configuration detector receives an identification signal from an attached power supply.

### BRIEF DESCRIPTION OF THE DRAWINGS

The invention will now be described by way of example, with reference to the accompanying Figures, of which:
Figure 1 is a schematic diagram of a variable power supply assembly connected to a charge storage element;
Figure 2 is a schematic diagram of the variable power supply assembly connected to a device;
Figure 3 is a schematic diagram of a variable power supply assembly connected to device components and a charge storage element, according to the invention;
Figure 4 is a schematic of a computing device;
Figure 5 is a schematic diagram of a variable power supply assembly having a two power supply sources independently limited by one or more current limiters; and
Figure 6 is a block diagram of a method of charge limit selection for the variable power supply assembly.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and those skilled in the art would understood that other embodiments may be utilized and that structural, logical, and electrical changes may be made without departing from the scope of the invention. The following description of exemplary embodiments is, therefore, not to be taken in a limited sense, and the scope of the invention is defined by the appended claims.

The functions or algorithms described herein may be implemented in software or a combination of software and human implemented procedures in one embodiment. The software may consist of computer executable instructions stored on computer readable media or computer readable storage device such as one or more memory or other type of hardware based storage devices, either local or networked. Further, such functions correspond to modules, which are software, hardware, firmware, or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

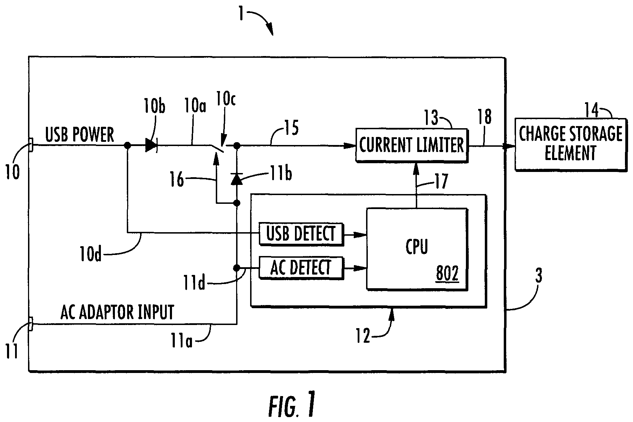

In an example shown in Figure 1, a variable power supply assembly 1 includes a first charger connector 10, a second charger connector 11, a power supply configuration detector 12, a current limiter 13, and a charge storage element 14. In an embodiment, the variable power supply assembly 1 is housed in a recharging cradle 3.

In an example, the first charger connector 10 is a universal serial bus ("USB") connector 10. The USB connector 10 includes one or more first power supply pins, and has a maximum current of approximately 500mA.

In an example, the second charger connector 11 is an AC connector 11. The AC connector 11 can be a barrel connector, or any other type of common AC connector. The AC connector 11 includes one or more second power supply pins, and has a maximum current greater than 500mA. In an embodiment, the AC connector 11 has a maximum current of 1-5 A. In another embodiment, the AC connector 11 has a maximum current of 1-3 A. In yet another embodiment, the AC connector 11 has a maximum current of 1 A.

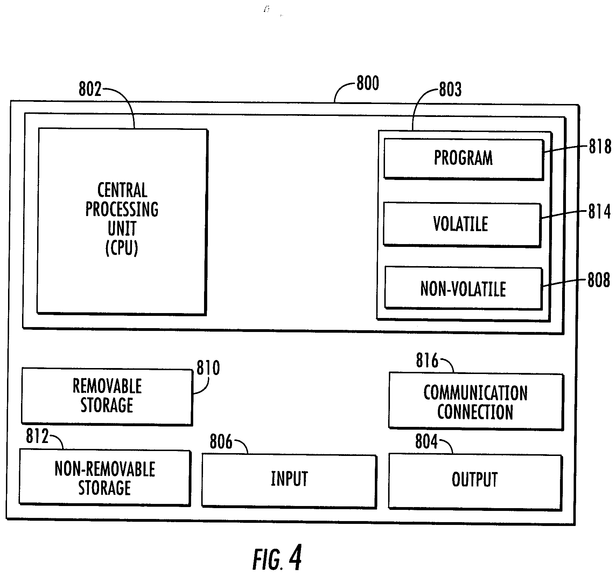

As shown in an example of Figure 1 and 4, the power supply configuration detector 12 includes a computer system or device 800. The computing device 800 includes one or more of a central processing unit 802 ("CPU"), memory 803, removable storage 810, and non-removable storage 812. Although various data storage elements are shown as part of the computing device 800, the storage may also or alternatively include cloud-based storage accessible via a network, such as the Internet.

Memory 803 may include volatile memory 814 and non-volatile memory 808. Computing device 800 may include - or have access to a computing environment that includes - a variety of computer-readable media, such as volatile memory 814 and non-volatile memory 808, removable storage 810 and non-removable storage 812. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computing device 800 can include or have access to a computing environment that includes input 806, output 804, and a communication connection 816. Output 804 may include a display device, such as a touchscreen, that also may serve as an input device. The input 806 may include one or more of a touchscreen, touchpad, mouse, keyboard, camera, one or more device-specific buttons, one or more sensors integrated within or coupled via wired or wireless data connections to the computing device 800, and other input devices. The computing device 800 may operate in a networked environment using a communication connection to connect to one or more remote computers, such as database servers. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable medium are executable by the central processing unit 802 of the computing device 800. A hard drive, CD-ROM, and RAM are some examples of articles including a non-transitory computer-readable medium such as a storage device. The terms computer-readable medium and storage device do not include carrier waves. For example, a computer program 818 capable of providing a generic technique to perform access control check for data access and/or for doing an operation on one of the servers in a component object model (COM) based system may be included on a CD-ROM and loaded from the CD-ROM to a hard drive. The computer-readable instructions allow computer 800 to provide generic access controls in a COM based computer network system having multiple users and servers.

In an embodiment, the current limiter 13 is a feedback loop with a setpoint controlled by the CPU 802. For example, the feedback loop can include a series resistance connected to an amplifier, which is used to measure an input current; an error amplifier, which provides negative feedback using a measured current and a setpoint; and a transistor, which is modulated by the error amplifier to produce a regulated output current.

In an embodiment, the charge storage element 14 is a battery. The battery 14 can include nickel cadmium, lithium, or any other rechargeable battery type known to those of ordinary skill in the art. In another embodiment, the charge storage element 14 is capacitor, a supercapacitor, or an ultracapacitor. The super- or ultracapacitor is known to those of ordinary skill in the art as capacitors that have a very high capacitance compared to traditional capacitors. Generally, traditional capacitors have two plates separated by a relatively thick dielectric composed of mica (ceramic), a thin plastic film, or even air. The super- or ultracapacitor also uses two plates, but these plates have a much higher surface area and are separated by a very thin insulator, generally composed of carbon, paper, or plastic.

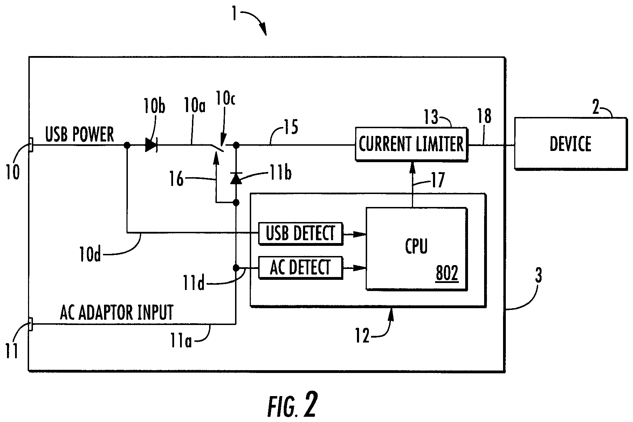

In an example shown in Figure 2, the variable power supply assembly 1 operates in the absence of the charge storage element 14. Instead, a device 2 is powered directly from power output from the current limiter 13 rather than power stored by the charge storage element 14.

In the examples shown in Figures 1 and 2, the first charger connector 10 has a first current path 10a that connects to a primary current path 15. The primary current path 15 is connected to the current limiter 13. The first current path 10a includes a first diode 10b, where the first diode 10b prevents back-feeding from the second charger connector 11 into the first charger connector 10.

In an example, the first current path 10a includes a disabling switch 10c. The disabling switch 10c is positioned between the first diode 10b and the primary current path 15.

A first connector detection path 10d connects the first current path 10a to the CPU 802 of the power supply configuration detector 12.

In the examples shown in Figures 1 and 2, the second charger connector 11 has a second current path 11a that connects to the primary current path 15. The second current path 11a includes a second diode 11b, where the second diode 11b prevents back-feeding from the first charger connector 10 into the second charger connector 11.

A second connector detection path 11d connects the second current path 11a to the CPU 802 of the power supply configuration detector 12.

In an example shown in Figure 1, a switch activating path 16 is connected to the second current path 11a and the disabling switch 10c. The switch activating path 16 is connected to the second current path 11a between the second charge connector 11 and the second diode 11b. When current is applied along the second current path 11a, the current is also applied along the switch activating path 16, which opens the disabling switch 10c. Thusly, the disabling switch 10c disables the first current path 10a nearly instantaneously when current flows along the second current path 11a. This disabling action prevents overcurrent along the first current path 10a. Conversely, when current along the second current path 11b is removed, the disabling switch 10c switches to a closed position, allowing current from the first charger connector 10 to flow to the primary current path 15.

The CPU 802 of the power supply configuration detector 12 is connected to the current limiter 13 through a control path 17, and the current limiter 13 is connected to the charge storage element 14 or other components of the device through a charging path 18.

The CPU 802 is communicatively coupled to the current limiter 13 through the control path 17, and controls a level of charge current output along the charging path 18, based on the detected power supply configuration of the first and second connector detection paths 10d, 11d. In the examples shown in Figures 1 and 4, CPU 802 accesses current controlling software stored in memory 803, and calculates and sets a current level output by the current limiter 13 to the charging path 18. Specifically, the CPU 802 detects the presence of, and changes to, a supply current from the first or second charger connector 10,11 along the first and second current paths 10d, 11d, respectively. In an embodiment, the CPU 802 receives an identification signal from an attached power supply to the first or second charger connector 10,11 using a known, simple communication protocol when the supply is connected, and the CPU 802 adjusts the current level output by the current limiter 13 to the charging path 18 accordingly. An advantage to using the identification signal is it allows for different types of power supplies of the same voltage, but different maximum currents, to be connected to the same physical input port. In another embodiment, the CPU 802 detects insertion and removal of power supply connectors to the first and second charger connectors 10,11 while charging the charge storage element.

In an example, the current limiter 13 is configured to limit charge current output to approximately 500 mA when a USB power supply is connected to the first charger connector 10. In another embodiment, the current limiter 13 is configured to limit charge current output to approximately 1A when an AC power supply is connected to the second charger connector 11.

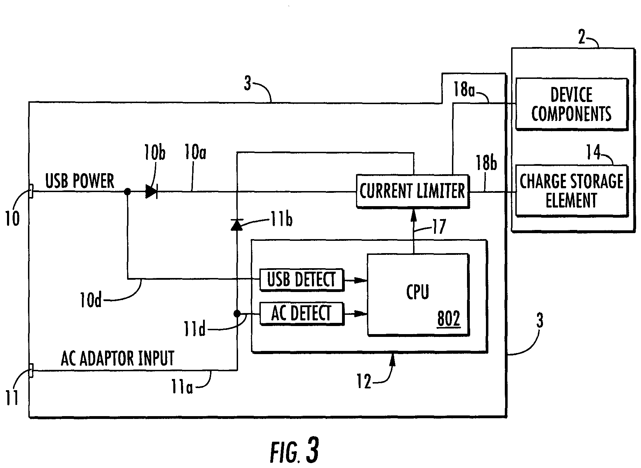

In an embodiment shown in Figure 3, the current limiter 13 limits a charge current in the first current path 10a independently of limiting charge current in the separate second current path 11a. The first charger connector 10 is directly connected to a first input of the current limiter 13 through the first current path 10a, and the second charger connector 11 is directly connected to a second input of the current limiter 13 through the second current path 11a. In an embodiment, the first current path 10a optionally includes the first diode 10b. In another embodiment, the first current path 10a optionally includes the disabling switch 10c connected to the switch activating path 16.

As shown in the embodiment of Figure 3, the current limiter 13 includes a first output charging path 18a and a second output charging path 18b. A current output level from the current limiter 13 to either the first output charging path 18a or second output charging path 18b can correspond to either of the current input levels from the first charger connector 10 and second charger connector 11 to the current limiter 13. For example, the current input from the first charger connector 10 can be output along the first output charging path 18a, and the current input from the second charger connector 11 can be output along the second output charging path 18b, or vice versa.

Thusly, in the embodiment of Figure 3, the variable power supply assembly 1 permits an output of a summation of currents from multiple supplies. In an exemplary embodiment (not shown), the output of the summation of currents is used to charge the device 2 simultaneously for improved charging times. For example, the charging base 3 (cradle) could draw power through the first charger connector 10, and simultaneously draw power from the second charger connector 11 to power wireless charging circuitry. When the device 2 is cradled, as described in Figure 3, the device 2 could simultaneously receive current charge, independent limited, from both charger connectors 10,11.

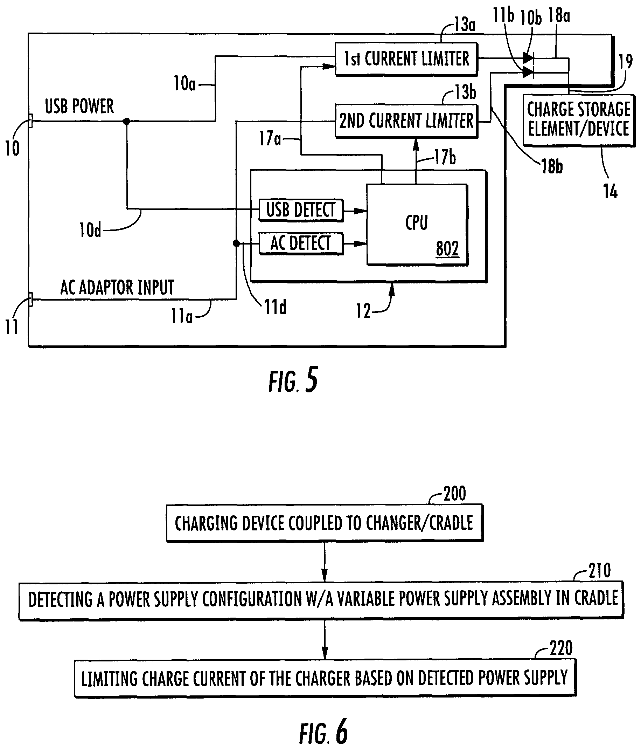

In an example shown in Figure 5, the variable power supply assembly 1 includes a first current limiter 13a and a second current limiter 13b. The first current limiter 13a has an input connected to the first charger connector 10 by the first current path 10a, and the second current limiter 13b has an input connected to the second charger connector 10 by the second current path 11a. In an embodiment, the first and second current paths 10a, 11a optionally include the first and second diodes 10b, 11b, respectively. In another embodiment, the first current path 10a optionally includes the disabling switch 10c connected to the switch activating path 16 shown in Figure 1. A first output charging path 18a is connected to an output of the first current limiter 13a, and a second output charging path 18b is connected to an output of the second current limiter 13b. The first output charging path 18a and the second output charging path 18b are connected to form an OR function, specifically, an OR gate. The first output charging path 18a includes the first diode 10b, and the second output charging path 18b includes the second diode 11b. The first output charging path 18a and the second output charging path 18b connect to a combined charging path 19 that in turn, connects with the charge storage element 14 and/or device 2.

In an embodiment not shown, but readily understood by those of ordinary skill in the art, the single current limiter 13 shown in Figure 3 is replaced with the first and second current limiters 13a, 13b shown in Figure 5. Thus, in an embodiment, the first output charging path 18a, rather than connecting with the second output charging path 18b, would instead connect independently to either device components or the charge storage element 14, as shown for example in the embodiment of Figure 3. Similarly, the second output charging path 18b, rather than connecting with the first output charging path 18a, would instead connect independently to the other of either the device components or the charge storage element 14, as shown for example in the embodiment of Figure 4.

In the example shown in Figure 5, the CPU 802 of the power supply configuration detector 12 is connected to the first current limiter 13a through a first control path 17a, and is connected to the second current limiter 13b through a second control path 17b. As described in the above embodiments, CPU 802 controls a level of charge current output from the first and second current limiters 13a, 13b along the first and second output charging paths 18a, 18b, respectively, based on the detected power supply configuration of the first and second connector detection paths 10d, 11d.

In an example shown in Figure 6, a method includes the step of charging a device 2 coupled to a cradle 3 having first and/or second charger connectors 10,11 at block 200.

A variable power supply assembly 1 in the cradle 3 detects a power supply configuration, such as a USB charger connection or an AC charger connection at block 210. In an embodiment, when detecting an attached power supply configuration, changes to the power supply configuration are detected. In another embodiment, detecting changes to the power supply configuration includes detecting insertion and removal of power supply of the first and second charger connectors 10,11 to the cradle 3 while charging the device 2. In an embodiment, detecting a charger attached power supply configuration includes detecting the presence of a supply voltage on a given input pin in the first or second charger connectors 10,11. In another embodiment, detecting a charger attached power supply configuration includes receiving an identification signal from an attached power supply from the first or second charger connectors 10,11.

An output charge current limit based on the detected power supplies of the first or second charger connectors 10,11 is set at block 220. In an embodiment, when a USB power supply is coupled to the charger 3 via the first charger connector 10, upon detection of an AC adapter power supply being connected to the charger 3 via the second charger connector 11, the method further includes disabling a USB charge path. In an embodiment, limiting a charge current includes limiting charge current in a USB charge path 10a independently of limiting charge current in a separate AC adapter charge path 11a.

In an embodiment, upon detection of only a USB power supply being coupled via the first charger connector 10 to the charger 3, the charge current is limited to approximately 500 mA. In an embodiment, the current in the USB charge path is limited to approximately 500 mA and the current in the AC adapter charge path is limited to approximately 1A.

As described above, in one aspect of the invention, a device utilizes a maximum available supply power by rapidly detecting changes to an attached power supply configuration and limiting charge current based on the available power supplies. The device can detect the insertion and removal of power supplies at runtime and adjust the charge current limit based on the updated supply configuration. If, at a certain time, a USB connector alone is attached, the device detects the absence of the AC adapter connector and limits the charging current to a maximum of 500 mA. If an AC adapter is later connected, the device detects the insertion event, disables the USB supply path, and increases the maximum charge current to 1 A.

In another exemplary embodiment, the USB and adapter power paths are independently limited by one or more current limiters, and may be combined to use a total available power. Thus, upon detection of both a USB and AC adapter power supply, the device may raise the charge current limit to 1.5 A on detection of the adapter, and thus use the total available power.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method comprising:
charging a device (2) coupled to a charger (3), the device (2) comprising components and a storage element (14);
detecting a charger attached power supply configuration of two or more power supplies, the two or more power supplies comprising first and second power supplies; and
said method being **characterised by**
outputting, by the charger (3), a charge current of the charger (3) based on a summation of currents of the detected power supplies, wherein the outputting comprises simultaneously:
outputting, along a first output charging path (18a), to the components of the device (2), current input to the charger from one of the first and second power supplies, and
outputting, along a second output charging path (18b), to the storage element (14) of the device (2), current input to the charger from the other one of the first and second power supplies.

2. The method of claim 1, wherein detecting an attached power supply configuration includes detecting changes to the power supply configuration.

3. The method of claim 2, wherein detecting changes includes detecting insertion and removal of power supply connectors to the charger while charging the device.

4. The method of claim 1, wherein the charger supply configuration comprises at least one of a Universal Serial Bus, USB, power supply coupled to the charger via a USB connector and an AC adapter power supply coupled to the charger via a barrel connector.

5. The method of claim 4, wherein upon detection of only a USB power supply being coupled to the charger, the charge current is limited to approximately 500 mA.

6. The method of claim 4, wherein outputting a charge current comprises outputting charge current in a USB charge path independently of outputting charge current in a separate AC adapter charge path.

7. The method of claim 6, wherein the current in the USB charge path is limited to approximately 500 mA and the current in the AC adapter charge path is limited to approximately 1A.

8. The method of claim 1, wherein detecting a charger attached power supply configuration comprises detecting the presence of a supply voltage on a given input pin.

9. The method of claim 1, wherein detecting a charger attached power supply configuration comprises receiving an identification signal from an attached power supply.

10. A charger (3) comprising:
a first charger connector (10) configured to receive current input from a first power supply;
a second charger connector (11) configured to receive current input from a second power supply;
a power supply configuration detector (12) coupled to the first (10) and second (11) charger connectors configured to detect a power supply configuration of two or more power supplies; and
said charger (3) being **characterised by**
a current limiter (13) coupled to the power supply configuration detector (12) configured to output, to a device (2) comprising components and a storage element (14), a charge current based on a summation of currents of the detected power supply configuration of the first and second power supplies, wherein the current limiter is configured to simultaneously:
output, along a first output charging path (18a), to the components of the device (2), current input to the charger (3) from one of the first and second power supplies, and
output, along a second output charging path (18b), to the storage element (14) of the device (2), current input to the charger (3) from the other one of the first and second power supplies.

11. The charger (3) of claim 10, wherein the first (10) and second (11) charger connectors comprise a cradle having multiple pins configured to couple to a charge storage element.

12. The charger (3) of claim 10, wherein the power supply configuration detector (12) is configured to detect changes to the power supply configuration.

13. The charger (3) of claim 12, wherein the power supply configuration detector (12) is configured to detect insertion and removal of power supply connectors to the first (10) and second (11) chargers.

14. The charger (3) of claim 10, wherein the first charger connector is a Universal Serial Bus, USB, connector configured to couple to a USB power supply.

15. The charger (3) of claim 10, wherein the second charger connector is a barrel connector configured to couple to an AC adapter power supply.

## Patentansprüche

1. Verfahren, umfassend:
Laden einer Vorrichtung (2), die mit einem Ladegerät (3) verbunden ist, wobei die Vorrichtung (2) Komponenten und ein Speicherelement (14) umfasst;
Erfassen einer an ein Ladegerät angeschlossenen Stromversorgungskonfiguration von zwei oder mehr Stromversorgungen, wobei die zwei oder mehr Stromversorgungen erste und zweite Stromversorgungen umfassen; und
wobei das Verfahren **gekennzeichnet ist durch**
Ausgeben, **durch** das Ladegerät (3), eines Ladestroms des Ladegeräts (3) auf der Grundlage einer Summe von Strömen der erfassten Stromversorgungen, wobei das Ausgeben gleichzeitig umfasst:
Ausgeben, entlang eines ersten Ausgabeladepfads (18a) zu den Komponenten der Vorrichtung (2), eines Stromeingangs an das Ladegerät von einer der ersten und der zweiten Stromversorgung, und
Ausgeben, entlang eines zweiten Ausgabeladepfads (18b) zum Speicherelement (14) der Vorrichtung (2), eines Stromeingangs an das Ladegerät von der anderen der ersten und der zweiten Stromversorgung.

2. Verfahren nach Anspruch 1, wobei das Erfassen einer angeschlossenen Stromversorgungskonfiguration das Erfassen von Änderungen an der Stromversorgungskonfiguration umfasst.

3. Verfahren nach Anspruch 2, wobei das Erfassen von Änderungen das Erfassen des Einführens und Entfernens von Stromversorgungsverbindern am Ladegerät während des Ladens der Vorrichtung umfasst.

4. Verfahren nach Anspruch 1, wobei die Ladegerätversorgungskonfiguration mindestens eines aus eine USB-Stromversorgung (USB - Universal Serial Bus), die über einen USB-Verbinder mit dem Ladegerät verbunden ist, oder einer Wechselstromadapter-Stromversorgung umfasst, die über einen Hohlsteckverbinder mit dem Ladegerät verbunden ist.

5. Verfahren nach Anspruch 4, wobei beim Erfassen nur einer USB-Stromversorgung, die mit dem Ladegerät verbunden ist, der Ladestrom auf ca. 500 mA begrenzt wird.

6. Verfahren nach Anspruch 4, wobei das Ausgeben eines Ladestroms das Ausgeben eines Ladestroms in einem USB-Ladepfad unabhängig vom Ausgeben eines Ladestroms in einem separaten Wechselstromadapter-Ladepfad umfasst.

7. Verfahren nach Anspruch 6, wobei der Strom im USB-Ladepfad auf ca. 500 mA und der Strom im Wechselstromadapter-Ladepfad auf ca. 1 A begrenzt wird.

8. Verfahren nach Anspruch 1, wobei das Erfassen einer an ein Ladegerät angeschlossenen Stromversorgungskonfiguration das Erfassen des Vorhandenseins einer Versorgungsspannung an einem bestimmten Eingangsstift umfasst.

9. Verfahren nach Anspruch 1, wobei das Erfassen einer an ein Ladegerät angeschlossenen Stromversorgungskonfiguration das Empfangen eines Identifikationssignals von einer angeschlossenen Stromversorgung umfasst.

10. Ladegerät (3), umfassend:
einen ersten Ladegeräteverbinder (10), der konfiguriert ist, Stromeingang von einer ersten Stromversorgung zu empfangen;
einen zweiten Ladegeräteverbinder (11), der konfiguriert ist, Stromeingang von einer zweiten Stromversorgung zu empfangen;
eine Stromversorgungskonfigurations-Erfassungsvorrichtung (12), die mit dem ersten (10) und zweiten (11) Ladegeräteverbinder verbunden ist, die konfiguriert sind, eine Stromversorgungskonfiguration von zwei oder mehr Stromversorgungen zu erfassen; und
wobei das Ladegerät (3) **gekennzeichnet ist durch**
einen Strombegrenzer (13), der mit der Stromversorgungskonfigurations-Erfassungsvorrichtung (12) verbunden ist, die zur Ausgabe an eine Vorrichtung (2) konfiguriert ist, die Komponenten und ein Speicherelement (14) umfasst,
einen Ladestrom, der auf einer Summierung von Strömen der erfassten Stromversorgungskonfiguration der ersten und zweiten Stromversorgung beruht, wobei der Strombegrenzer konfiguriert ist, um gleichzeitig:
entlang eines ersten Ausgabeladepfads (18a) zu den Komponenten der Vorrichtung (2) einen Stromeingang an das Ladegerät (3) von einer der ersten und der zweiten Stromversorgung auszugeben, und
entlang eines zweiten Ausgabeladepfads (18b) zum Speicherelement (14) der Vorrichtung (2) einen Stromeingang an das Ladegerät (3) von der anderen der ersten und der zweiten Stromversorgung auszugeben.

11. Ladegerät (3) nach Anspruch 10, wobei der erste (10) und der zweite (11) Ladegeräteverbinder eine Halterung mit mehreren Stiften umfassen, die konfiguriert sind, mit einem Ladungsspeicherelement verbunden zu werden.

12. Ladegerät (3) nach Anspruch 10, wobei die Stromversorgungskonfigurations-Erfassungsvorrichtung (12) konfiguriert ist, Änderungen an der Stromversorgungskonfiguration zu erfassen.

13. Ladegerät (3) nach Anspruch 12, wobei die Stromversorgungskonfigurations-Erfassungsvorrichtung (12) konfiguriert ist, das Einführen und Entfernen von Stromversorgungsverbindern am ersten (10) und zweiten (11) Ladegerät zu erfassen.

14. Ladegerät (3) nach Anspruch 10, wobei der erste Ladegeräteverbinder ein USB-Verbinder ist, der konfiguriert ist, mit einer USB-Stromversorgung verbunden zu werden.

15. Ladegerät (3) nach Anspruch 10, wobei der zweite Ladegeräteverbinder ein Hohlsteckverbinder ist, der konfiguriert ist, mit einer Wechselstromadapter-Stromversorgung verbunden zu werden.

## Revendications

1. Procédé comprenant :
la charge d'un dispositif (2) couplé à un chargeur (3), ledit dispositif (2) comprenant des composants et un élément de stockage (14) ;
la détection d'une configuration d'alimentation électrique liée à un chargeur comptant au moins deux alimentations électriques, les au moins deux alimentations électriques comprenant des première et deuxième alimentations électriques ; et
ledit procédé étant **caractérisé**
**par** la sortie, par le chargeur (3), d'un courant de charge du chargeur (3) en fonction d'une sommation des courants des alimentations électriques détectées, ladite sortie comprenant simultanément :
la sortie, le long d'un premier chemin de charge de sortie (18a), jusqu'aux composants du dispositif (2), d'une entrée de courant vers le chargeur à partir de l'une des première et deuxième alimentations électriques et
la sortie, le long d'un second chemin de charge de sortie (18b), jusqu'à l'élément de stockage (14) du dispositif (2), d'une entrée de courant vers le chargeur à partir de l'autre alimentation électrique parmi les première et deuxième alimentations électriques.

2. Procédé selon la revendication 1, dans lequel la détection d'une configuration d'alimentation liée comprend la détection des variations de la configuration d'alimentation électrique.

3. Procédé selon la revendication 2, dans lequel la détection des variations comprend la détection de l'insertion dans le chargeur et du retrait du chargeur des connecteurs d'alimentation électrique pendant la charge du dispositif.

4. Procédé selon la revendication 1, dans lequel la configuration d'alimentation du chargeur comprend une alimentation électrique de bus série universel, USB (Universal Serial Bus), couplée au chargeur par l'intermédiaire d'un connecteur USB, et une alimentation électrique d'adaptateur à courant alternatif couplée au chargeur par l'intermédiaire d'un connecteur cylindrique.

5. Procédé selon la revendication 4, dans lequel lors de la détection du couplage d'une seule alimentation électrique USB au chargeur, le courant de charge est limité à environ 500 mA.

6. Procédé selon la revendication 4, dans lequel la sortie d'un courant de charge comprend la sortie d'un courant de charge dans un chemin de charge USB indépendamment de la sortie de courant de charge, dans un chemin séparé de charge d'adaptateur à courant alternatif.

7. Procédé selon la revendication 6, dans lequel le courant dans le chemin de charge USB est limité à environ 500 mA et où le courant dans le chemin de charge d'adaptateur à courant alternatif est limité à environ 1 A.

8. Procédé selon la revendication 1, dans lequel la détection d'une configuration d'alimentation électrique liée à un chargeur comprend la détection de la présence d'une tension d'alimentation sur une broche d'entrée donnée.

9. Procédé selon la revendication 1, dans lequel la détection d'une configuration d'alimentation liée à un chargeur comprend la réception d'un signal d'identification d'une alimentation électrique liée.

10. Chargeur (3) comprenant :
un premier connecteur de chargeur (10), conçu pour recevoir une entrée de courant d'une première alimentation électrique ;
un second connecteur de chargeur (11), conçu pour recevoir une entrée de courant d'une deuxième alimentation électrique ;
un détecteur de configuration d'alimentation électrique (12), couplé aux premier (10) et second (11) connecteurs de chargeur et conçu pour détecter une configuration d'alimentation électrique des au moins deux alimentations électriques ; et
ledit chargeur (3) étant **caractérisé**
**par** un limiteur de courant (13), couplé au détecteur de configuration d'alimentation électrique (12) conçu pour sortir, vers un dispositif (2) comprenant des composants et un élément de stockage (14),
un courant de charge basé sur une sommation des courants de la configuration d'alimentation électrique détectée des première et deuxième alimentations électriques, le limiteur de courant étant conçu, simultanément :
pour sortir, le long d'un premier chemin de charge de sortie (18a), vers les composants du dispositif (2), une entrée de courant vers le chargeur (3) à partir de l'une des première et deuxième alimentations électriques et
pour sortir, le long d'un second chemin de charge de sortie (18b), à l'élément de stockage (14) du dispositif (2), une entrée de courant vers le chargeur (3) à partir de l'autre alimentation électrique parmi les première et deuxième alimentations électriques.

11. Chargeur (3) selon la revendication 10, dans lequel les premier (10) et second (11) connecteurs de chargeur comprennent un berceau comportant plusieurs broches conçues pour un couplage à un élément de stockage de charges.

12. Chargeur (3) selon la revendication 10, dans lequel le détecteur de configuration d'alimentation électrique (12) est conçu pour détecter des variations dans la configuration d'alimentation électrique.

13. Chargeur (3) selon la revendication 12, dans lequel le détecteur de configuration d'alimentation électrique (12) est conçu pour détecter l'insertion des connecteurs d'alimentation électrique dans les premier (10) et second (11) chargeurs et leur retrait.

14. Chargeur (3) selon la revendication 10, dans lequel le premier connecteur de chargeur est un connecteur de bus série universel, USB, conçu pour un couplage à une alimentation électrique USB.

15. Chargeur (3) selon la revendication 10, dans lequel le second connecteur de chargeur est un connecteur cylindrique conçu pour un couplage à une alimentation électrique d'adaptateur à courant alternatif.
